# EUROPÄISCHE PATENTSCHRIFT

(11) **EP 1 138 397 B1**
(45) Veröffentlichungstag und Bekanntmachung des Hinweises auf die Patenterteilung: **29.12.2004**
(21) Anmeldenummer: 01108464.7
(22) Anmeldetag: 14.10.1999
(51) Int. Cl.: B05C 17/005, B01F 13/00

(54) **Vorrichtung zum Öffnen eines eine pastöse Masse beinhaltenden Schlauchbeutels**
Opener for opening a tubular bag comprising a pasty material
Dispositif pour ouvrir un sachet tubulaire contenant une matière pâteuse

(30) Priorität: 14.10.1998 DE 29818280 U
(43) Veröffentlichungstag der Anmeldung: 04.10.2001
(62) Teilanmeldung aus: 99953813.5
(73) Patentinhaber: KETTENBACH GmbH & CO. KG, 35713 Eschenburg (DE)
(72) Erfinder: Bublewitz, Alexander, 35745 Herborn (DE); Suchan, Matthias, 57627 Hachenburg (DE)
(74) Vertreter: Hilleringmann, Jochen, Dipl.-Ing.

(56) Entgegenhaltungen:
- DE-A- 3 823 708
- DE-C- 19 710 878
- US-A- 4 453 651
- US-A- 4 722 449
- US-A- 4 884 705
- US-A- 4 898 293

## Beschreibung

Die Erfindung betrifft eine Vorrichtung zum Öffnen eines Schlauchbeutels, in dem sich eine pastöse Masse befindet. Ferner soll mit dieser Vorrichtung auch die pastöse Masse aus dem Schlauchbeutel herausgeleitet werden.

Pastöse Massen werden in starren Behältern bzw. Kartuschen mit verschiebbaren Bodenwänden angeboten, die mittels manuell oder motorisch vorbewegbaren Stempelelementen vorbewegt werden, um Druck auf die pastösen Massen aufzubringen, wodurch diese aus den Kartuschen bzw. Behältnissen gelangen und nach einer Vermischung in einer Mischereinheit ausgegeben werden. . Zwecks Reduktion von Verpackungsmaterial ist man in den letzten Jahren in zunehmendem Maße dazu übergegangen, die pastösen Massen in Schlauchbeuteln anzubieten. Diese müssen, um die pastöse Masse auszubringen, vorzugsweise an ihren stirnseitigen Enden geöffnet werden. Dies geschieht beispielsweise mit feststehenden Anstechdornen o.dgl. Schneideelementen, die an der Stirnwand einer Aufnahmekappe angeordnet sind, welche das stirnseitige Ende eines Schlauchbeutels umgibt und einen Austragstutzen aufweist.

Aus EP-A-0 787 655 ist es bekannt, in dem Stutzen der Aufnahmekappe ein Anstechröhrchen anzuordnen, das federnd in Richtung auf die Stirnfläche des stirnseitigen Endes des Schlauchbeutels vorgespannt ist.

Die bisher bekannten Systeme zum selbsttätigen Öffnen von Schlauchbeuteln sind insofern verbesserungswürdig, als das Öffnen von Schlauchbeuteln stets voraussetzt, dass Druck auf den Schlauchbeutel und damit auch Druck auf die pastöse Masse in dem Schlauchbeutel und damit auch Druck auf die pastöse Masse in dem Schlauchbeutel ausgeübt werden muss. Damit geht der Vorgang des Öffnens des Schlauchbeutels einher mit dem Austragen der pastösen Masse.

Eröffnungs- bzw. Austragvorrichtungen für z.B. Zweikomponenten-Massen werden mitunter intermittierend benutzt, wobei der Zeitraum zwischen zwei aufeinanderfolgenden Benutzungen derart groß sein kann, dass das Gemisch in der Mischereinheit aushärtet. Damit muss die Mischereinheit abgenommen und gegen eine neue ersetzt werden, bevor wieder Gemisch ausgetragen werden kann. Bei der Mischereinheit handelt es sich also um ein Einwegteil, bei dem man bestrebt sein sollte, die Anzahl der Teile der Wegwerb-Mischereinheit so gering wie möglich zu halten.

Aus US-A-4 885 704 ist eine Schraubverschlusskappe für ein Behältnis bekannt, die eine Schraubkappe aufweist, welche dauerhaft mit einem Auslassstutzen in Gewindeeingriff steht. In dem Auslassstutzen ist ein Auslassröhrchen axial zwischen einer Vorschub- und einer Rückzugsposition geführt. In seiner Vorschubposition dringt das Auslassröhrchen durch eine das Behältnis verschließende Aufreißfolie hindurch. Nach Entfernen eines Sicherungsstopfens lässt sich die Schraubkappe verdrehen, wobei sie sich in Richtung auf das Behältnis vorbewegt und dabei das Auslassröhrchen aus dessen Rückzugsposition in dessen Vorschubposition mitnimmt. Wird die Schraubkappe danach wieder zurückgedreht, so gibt sie eine Öffnung frei, aus der aus dem Behälter und durch das Auslassröhrchen gelangende Masse austreten kann.

Der Erfindung liegt die Aufgabe zugrunde, eine Vorrichtung zum Öffnen eines eine pastöse Masse beinhaltenden Schlauchbeutels zu schaffen, mit der der Schlauchbeutel sich öffnen lässt, ohne dass der Schlauchbeutel bzw. die pastöse Masse einem externen Druck ausgesetzt sein muss und gegen ein unbeabsichtigtes Öffnen zuverlässig gesichert ist.

Zur Lösung dieser Aufgabe wir mit der Erfindung eine Vorrichtung zum Öffnen und eines eine pastöse Masse beinhaltenden Schlauchbeutels mit den Merkmalen des Anspruchs 1 vorgeschlagen. Einzelne Ausführungsbeispiele der Erfindung sind jeweils Gegenstand der Unteransprüche.

Bei der erfindungsgemäßen Vorrichtung wird ein Betätigungselement indirekt manuell bewegt, wobei dieses Betätigungselement als Sicherung zum Schutze des Anstechröhrchens vor unbeabsichtigten Bewegungen aus der Rückzugsposition in die Vorschubposition genutzt werden kann. Dieses Betätigungselement ist in zwei axialen Positionen, die der Rückzugsposition und der Vorschubposition des Anstechröhrchens entsprechen, am Stutzen bzw. an der Aufnahmekappe gegen unbeabsichtigte Axialbewegungen verriegelbar. Das Betätigungselement ist als Schraubelement ausgebildet, das einen Innengewindeabschnitt aufweist, der mit einem Außengewindeabschnitt am Stutzen in Eingriff bringbar ist. Durch diese beiden Gewindeabschnitte lässt sich das Betätigungselement durch Verschraubung mit dem Stutzen axial verschieben, um das Anstechröhrchen in den Folienschlauch hineinzutreiben. Sowohl das Betätigungselement als auch der Stutzen weisen beidseitig ihrer Gewindeabschnitte Bereiche auf, die frei von Gewinden sind. So lange die beiden Gewindeabschnitte nicht in Gewindeeingriff miteinander sind, führt eine Verdrehung des Betätigungselements nicht zu einer axialen Verschiebung. Darüber hinaus verhindern bzw. begrenzen die beiden nicht in Gewindeeingriff miteinander stehenden Gewindeabschnitte eine lineare axiale Verschiebung des Betätigungselements. Damit ist dieses vor und nach dem Gewindeeingriff der beiden Gewindeabschnitte gegen ungewollte axiale Bewegungen gesichert.

Die erfindungsgemäße Vorrichtung lässt sich sowohl bei Aufnahmekappen für einen einzigen Schlauchbeutel als auch bei kombinierten Aufnahmekappen für mehrere, beispielsweise zwei Schlauchbeutel, einsetzen. Im letztgenannten Fall weist die Aufnahmekappe mehrere Austragstutzen auf, die jeweils mit einem Anstechröhrchen versehen sind. Diese Anstechröhrchen können untereinander verbunden sein, um sie gemeinsam in die jeweiligen Schlauchbeutel hineinzutreiben. Es ist aber durchaus auch möglich, dass die Anstechröhrchen untereinander nicht verbunden sind, so dass jeder Schlauchbeutel separat "angestochen" werden kann.

Nachfolgend wird anhand der Figuren ein Ausführungsbeispiel der Erfindung näher erläutert. Im einzelnen zeigen:

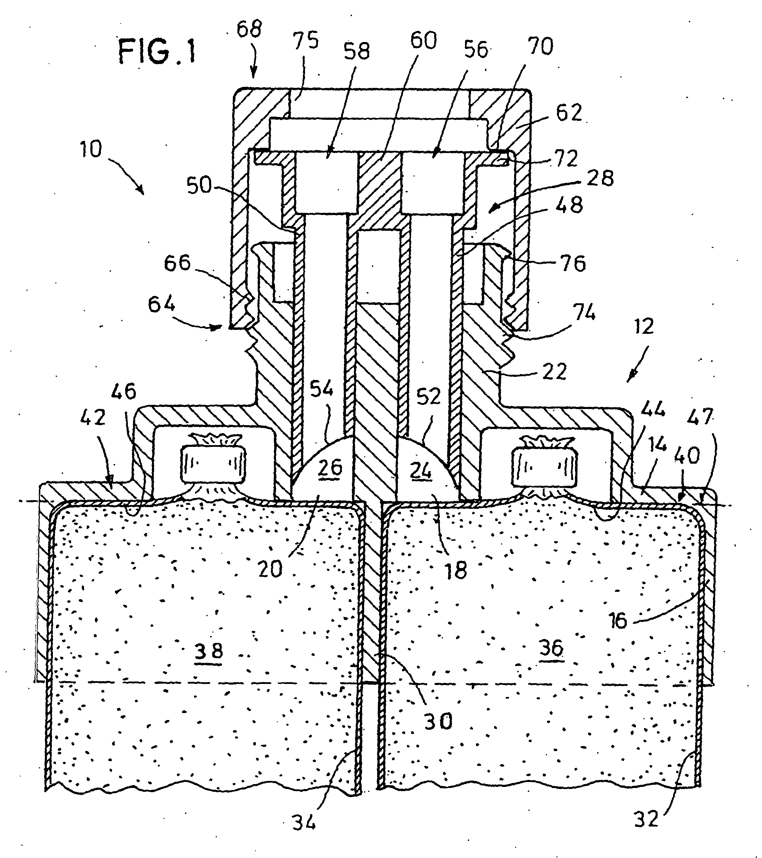

- Fign. 1 bis 3: eine Vorrichtung zum gleichzeitigen Öffnen zweier Schlauchbeutel, wobei die Vorrichtung in unterschiedlichen Betriebszuständen dargestellt ist.

In den Fign. 1 bis 3 ist ein Ausführungsbeispiel einer Vorrichtung 10 zum Öffnen zweier Schlauchbeutel dargestellt. Die Vorrichtung 10 weist eine Aufnahmekappe 12 auf, der mit einer Stirnwand 14 und einem von dieser abstehenden Rand 16 versehen ist. In der Stirnwand 14 befinden sich zwei Öffnungen 18,20, in deren Bereich von der Stirnwand 14 in zum Rand 16 entgegerigesetzter Richtung ein Stutzen 22 absteht. In dem Stutzen 22 befinden sich zwei von den Öffnungen 18,20 aus sich erstreckende Kanäle 24,26, die bis zum der Stirnwand 14 abgewandten Austragende 28 des Stutzens 22 verlaufen. Die Stirnwand 14 weist zwischen den beiden Öffnungen 18,20 eine Trennwand 30 auf, die in Richtung des Randes 16 von der Stirnwand 14 absteht. Auf diese Weise entstehen zwei Aufnahmeräume für zwei Schlauchbeutel 32,34, die jeweils eine pastöse Masse 36,38 beinhalten. Die stirnseitigen Enden 40,42 der beiden Schlauchbeutel 32,34 sind von der Aufnahmekappe 12 bzw. dem Rand 16 und der Zwischenwand 30 umgeben, wobei die Stirnflächen 44,46 der Schlauchbeutel 32,34 entlang einer Anlageebene 47 an der Stirnwand 14 der Aufnahmekappe anliegen. Die Schlauchbeutel 32,34 können mit der Aufnahmekappe 12 fest verbunden sein, was beispielsweise durch Verklebung erfolgt.

In jedem Kanal 24,26 befindet sich ein Anstechröhrchen 48,50, das ein angeschrägtes und damit spitz zulaufendes Anstechende 52,54 aufweist beiden Anstechröhrchen 48,50 sind axial verschiebbar in den Kanälen 24,26 angeordnet und stehen in ihrer Rückzugsposition gemäß Fig. 1 über das Austragende 28 des Stutzens 22 über. An ihren den Anstechenden 52,54 abgewandten Enden 56,58 sind die beiden Anstechröhrchen 48,50 untereinander verbunden, was bei 60 dargestellt ist. Aufgabe der Anstechröhrchen 48,50 ist es zum einen, durch Eindringen in die Stirnflächen 44,46 die Schlauchbeutel 32,34 zu öffnen, und zum anderen bei geöffneten Schlauchbeuteln 32,34 die pastösen Massen 36,38 zwecks Ausbringung derselben passieren zu lassen.

Auf dem Stutzen 22 befindet sich eine Schraubkappe 62, die als Betätigungselement zum axialen Verschieben der Anstechröhrchen 48,50 dient. Die Schraubkappe 62 ist im wesentlichen zylindrisch und weist an ihrem der Aufnahmekappe 12 zugewandten einen Ende 64 einen Innengewindeabschnitt 66 auf. An dem anderen Ende 68 ist die Schraubkappe 62 mit einer Innenschulter 70 versehen, die an einem umlaufenden Radialflansch der beiden Anstechröhrchen 48,50 anliegt. Zwischen der Innenschulter 70 und dem Innengewindeabschnitt 66 ist die Schraubkappe 62 an ihrer Innenseite glatt und vorsprungsfrei ausgebildet.

Im längs seiner axialen Erstreckung mittleren Teil weist der Stutzen 22 einen Außengewindeabschnitt 74 auf, der mit dem Innengewindeabschnitt 66 der Schraubkappe 62 in Gewindeeingriff bringbar ist. Oberhalb und unterhalb des Außengewindeabschnitts 74 des Stutzens 22 weist dieser glatte vorsprungsfreie Bereiche auf, deren Axialerstreckung gleich bzw. geringfügig größer als die Axialerstreckung des Innengewindeabschnitts 66 ist. An seinem der Aufnahmekappe 22 abgewandten vorderen Ende 28 ist der Stutzen 22 mit einem außenliegenden Sicherungsvorsprung 76 versehen.

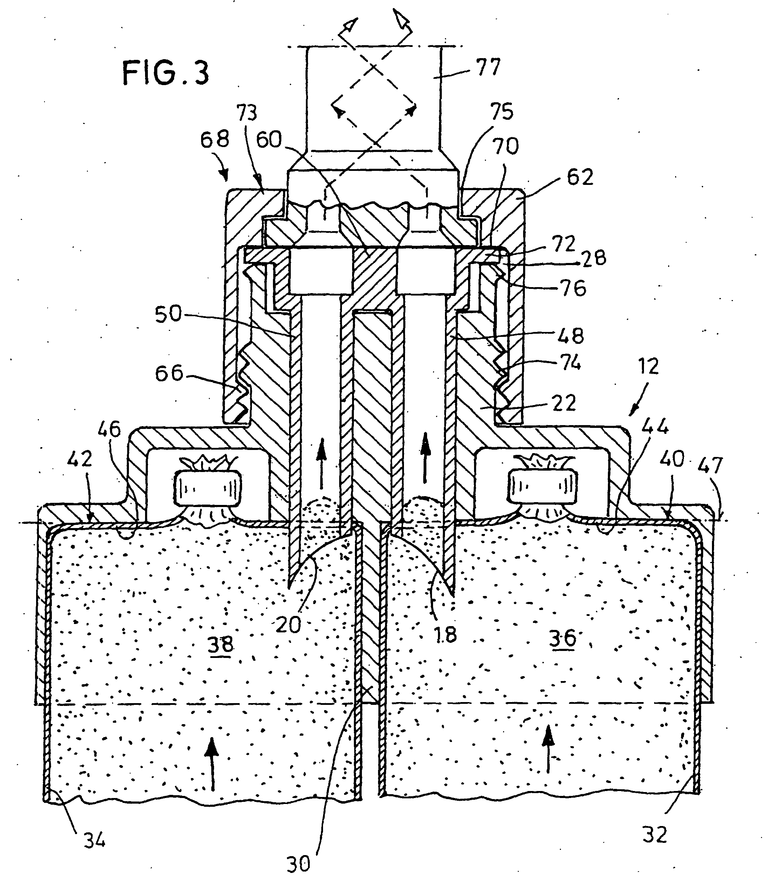

Die Schraubkappe 62 wird werksseitig über den Sicherungsvorsprung 76 auf den Stutzen 22 geschoben, bis sich der Innengewindeabschnitt 66 zwischen dem Sicherungsvorsprung 76 und dem Außengewindeabschnitt 74 des Stutzens 22 befindet (siehe Fig. 1). In dieser Situation befinden sich die Anstechdorne 48,50, die vor der Schraubkappe 62 in die Kanäle 24,26 eingesetzt worden sind jeweils, in ihrer Rückzugsposition, in der ihre Anstechspitzen 52,54 nicht über die Anlageebene 47 vorstehen. In dieser Rückzugsposition verbleiben die Anstechdorne 48,50 auch dann, wenn auf die Schraubkappe 62 in axialer Richtung eine Kraft ausgeübt wird, da die Innengewinde- und Außengewindeabschnitte 66,74 eine rein axiale Bewegung der Kappe 62 verhindern. Erst durch Drehen der Schraubkappe 62 bei gleichzeitig aufgebrachtem geringen axialen Andruck bewegt sich die Schraubkappe 62 in axialer Richtung, da die beiden Gewindeabschnitte 66,74 in Gewindeeingriff miteinander kommen bzw. sind (siehe Fig. 6). Durch diese axiale Bewegungskomponente der Schraubkappe 62 werden die Anstechdorne 48,50 ebenfalls axial vorbewegt, so dass ihre Anstechspitzen 52,54 in die Stirnflächen 44,46 der Schlauchbeutel 32,34 einstechen. Die Anstechdorne 48,50 befinden sich vollständig in ihrer Vorschubposition, in der ihre Anstechspitzen 52,54 über die Anlageebene 47 überstehen, wenn die beiden Gewindeabschnitte 66,74 mit weiterer Verdrehung der Schraubkappe 62 wiederum außer Eingriff miteinander gebracht sind (siehe Fig. 3). In dieser Situation ist eine axiale Verschiebung der Schraubkappe 62 wiederum durch die sich blockierenden Gewindeabschnitte 66,74 verhindert, so dass die Anstechdorne 48,50 in ihrer Vorschubposition gesichert.sind.

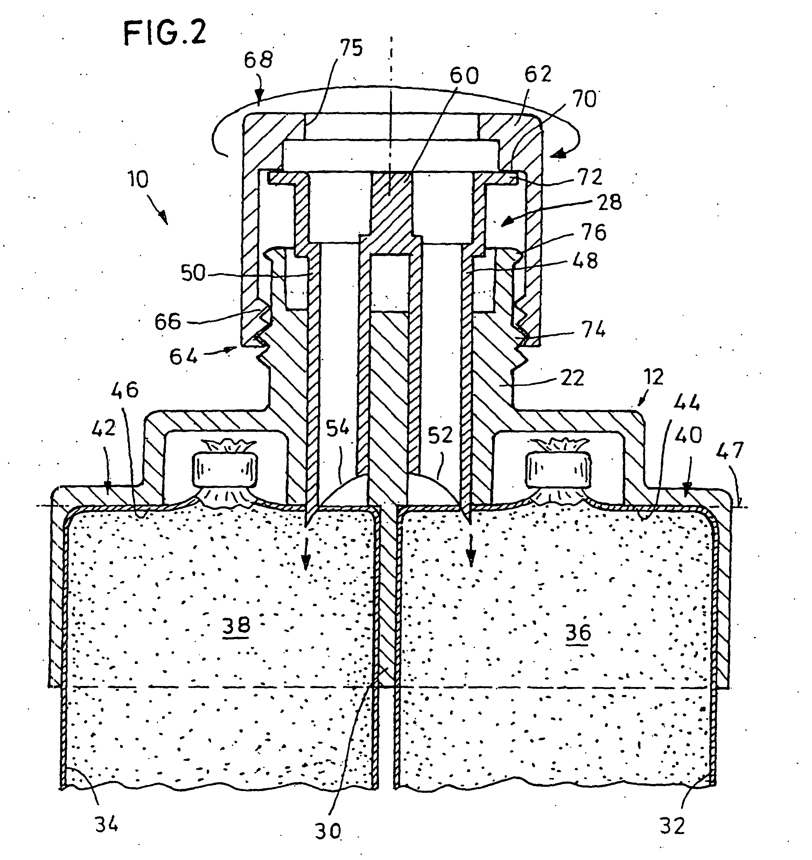

Nun kann, wie in Fig. 3 angedeutet, mit den Anstechdornen 48,50 ein dynamischer oder statischer Mischer 77 verbunden werden, in dem das durch die Anstechdorne 48,50 gelangende pastöse Material 36,38 miteinander vermischt wird. Der Mischer 77 ist an der Schraubkappe 62 gehalten. Die Schraubkappe 62 hat also eine Doppelfunktion, indem sie ausgehend von Fig. 2 zunächst der Vorbewegung der Anstechdorne 48,50 bis in die Schlauchbeutel 32,34 hinein dient (Fig. 3),um dann durch entsprechende Drehpositionierung für die "passende Ausrichtung" ihrer Öffnung 75 relativ zum Kupplungsende 73 des Mischers 77 zu sorgen, so dass sich dieses Kupplungsende 73 von oben in die Schraubkappe 62 einführen lässt. Anschließend wird dann die Schraubkappe 62 verdreht, um die Fixierung des Mischers 77 nach Art eines BajonettVerschlusses zu ermöglichen. Diese Verdrehungen der Schraubkappe 62 erfolgen in der Position gemäß Fig. 3, in der die Schraubkappe 62 außer Gewindeeingriff mit dem Stutzen 22 steht.

Die Arretierung der Schraubkappe 62 in jeweils deren Aufnahmedrehposition und der Verriegelungsposition und die Begrenzung der Verdrehung lässt sich durch Verrastung der Schraubkappe 62 mit der Aufnahmekappe 12 realisieren. Da der axiale Abstand der Schraubkappe 62 von der Aufnahmekappe 12 beim Aufschrauben auf den Stutzen 22 zwecks Vorbewegung der Anstechdorne 48,50 zu den Verhältnissen in der Position gemäß Fig. 3 unterschiedlich ist, kann die Verrastung und Bewegungsbegrenzung konstruktiv so ausgebildet sein, dass hierzu erforderliche Rastvorsprünge und -vertiefungen sowie Anschläge erst dann zusammenwirken, wenn die Gewindeabschnitte 66,74 gemäß Fig. 3 wieder außer Eingriff sind.

## Patentansprüche

1. Vorrichtung zum Öffnen eines eine pastöse Masse beinhaltenden Schlauchbeutels mit
- einer Aufnahmekappe (12) zur Aufnahme eines eine Stirnfläche (44;46) aufweisenden stirnseitigen Endes (40;42) des Schlauchbeutels (32;34), wobei die Aufnahmekappe (12) eine eine Anlageebene (47) für die Stirnfläche (44;46) des Schlauchbeutels (32;34) bildende Stirnwand (14) und einen von dieser abstehenden Rand (16) aufweist,
- einer in der Stirnwand (14) angeordneten Öffnung (18;20), die von einem von der Stirnwand (14) abstehenden Stutzen (22) umgeben ist,
- einem Anstechröhrchen (48;50), das axial verschiebbar in dem Stutzen (22) geführt ist und aus einer Rückzugsposition, in der das Anstechröhrchen (48;50) nicht über die Anlageebene (47) vorsteht, in eine Vorschubposition verschiebbar ist, in der das Anstechröhrchen (48;50) über die Anlageebene (47) übersteht, und
- einem außen um den Stutzen (22) angeordneten axial verschiebbaren Betätigungselement (62) zum Bewegen des Anstechröhrchens (48;50) aus der Rückzugsposition in die Vorschubposition,
- wobei das Betätigungselement (62) eine Anlagefläche (70) zur Anlage an dem Anstechröhrchen (48;50) aufweist und in zwei Bewegungspositionen an dem Stutzen (22) und/oder an der Aufnahmekappe (12) gegen unbeabsichtigte Axialbewegungen verriegelbar ist und
- wobei das Betätigungselement (62) einen Innengewindeabschnitt (66) und der Stutzen (22) einen Außengewindeabschnitt (74) aufweist,
**dadurch gekennzeichnet,**
- **dass** der Außengewindeabschnitt (74) sowohl von der Aufnahmekappe (12) als auch von dem Austragende (28) des Stutzens (22) um mindestens die axiale Erstreckung des Innengewindeabschnitts (66) des Betätigungselements (62) beabstandet angeordnet ist,
- **dass** der Innengewindeabschnitt (66) des Betätigungselements (62) um zumindest die axiale Erstreckung des Außengewindeabschnitts (74) des Stutzens (22) von der Anlagefläche (70) des Betätigungselements (62) beabstandet an dem der Aufnahmekappe (12) zugewandten Ende (64) des Betätigungselements (62) angeordnet ist und
- **dass** ausgehend von der Rückzugsposition des Anstechröhrchens (48;50) bei Ausübung einer axialen Kraft auf das Betätigungselement (62) in Richtung auf die Aufnahmekappe (12) der Innengewindeabschnitt (66) des Betätigungselements (62) mit dem Außengewindeabschnitt (74) des Stutzens (22) in Gewindeeingriff bringbar ist.

2. Vorrichtung nach Anspruch 1, **dadurch gekennzeichnet, dass** die Stirnwand (14) der Aufnahmekappe (12) zur Anlage durch die Stirnflächen (44;46) zweier Schlauchbeutel (32;34) vorgesehen ist und dass in dem Aufnahmestutzen (22) zwei Anstechröhrchen (48;50) zum Eindringen in die Stirnflächen (44;46) der beiden Schlaubeutel (32;34) zwecks gemeinsamer Bewegung durch das Betätigungselement (62) axial verschiebbar angeordnet sind.

3. Vorrichtung nach Anspruch 2, **dadurch gekennzeichnet, dass** auf die Anstechröhrchen (48;50) ein Mischer (77) zum Vermischen von aus den Anstechröhrchen (48;50) austretenden pastösen Massen aufsteckbar ist.

## Claims

1. A device for opening a tube bag containing a pasty mass, comprising
- a receiving cap (12) for receiving a front end (40;42) of the tube bag (32;34), the front end (40;42) comprising an end face (44;46), the receiving cap (12) comprising an end wall (14) forming an abutment plane (47) for the end face (44,46) of the tube bag (32;34), and an edge (16) projecting from the end wall (14),
- an opening (18;20) arranged in the end wall (14) and surrounded by a stub (22) projecting from the end wall (14), and
- a piercing tube (48;50) guided for axial displacement in the stub (22) and adapted to be displaced from a retracted position in which the piercing tube (48;50) does not extend beyond the abutment plane (47), into an advanced position in which in the piercing tube (48;50) extends beyond the abutment plane (47), and
- an axially displaceable operating element (62) arranged externally around the stub (22) for moving the piercing tube (48;50) from the retracted position into the advanced position,
- the operating element (62) comprising an abutment face (70) for abutment on the piercing tube (48;50) and is adapted to be locked, in two movement positions, to the stub (22) and/or to the receiving cap (12) for preventing unintended axial movements, and
- the operating element (62) comprising an inner thread portion (66) and the stub (22) comprising an outer thread portion (74),
**characterized in**
- **that** the outer thread portion (74) is spaced from both the receiving cap (12) and from the discharge end (28) of the stub (22) by at least the axial extension of the inner thread portion (66) of the operating element (62), and that the inner thread portion (66) of the operating element (62),
- **that** the inner thread portion (66) of the operating element (62), while spaced from the abutment face (70) of the operating element (62) by at least the axial extension of the outer thread portion (74) of the stub (22), is arranged on the end (64) of the operating element (62) facing towards the receiving cap (12),
- **that**, starting from the retracted position of the piercing tube (48; 50), the inner thread portion (66) of the operating element (62) can be brought into threaded engagement with the outer thread portion (74) of the stub (22) when an axial force is exerted on the operating element (62) in the direction of the receiving cap (12).

2. The device according to claim 1, **characterized in that** the end wall (14) of the receiving cap (12) is provided for abutment by the end faces (44;46) of two hose bags (32;34), and that the receiving stub (22) has two piercing tubes (48;50) arranged therein for axial displacement so as to cause the piercing tubes to enter the end faces (44;46) of the two hose bags (32;34) for common movement by the operating element (62).

3. The device according to claim 2, **characterized in that** the piercing tubes (48;50) are adapted to have a mixer (77) mounted thereon for mixing the pasty masses issued from the piercing tubes (48;50).

## Revendications

1. Dispositif pour ouvrir un sac tubulaire contenant une masse pâteuse, comprenant :
-- un capuchon de réception (12) destiné à recevoir une extrémité frontale (40 ; 42) du sac tubulaire (32 ; 34), extrémité qui présente une surface frontale (44 ; 46), ledit capuchon de réception (12) comprenant une paroi frontale (14) qui définit un plan d'appui (47) pour la surface frontale (44 ; 46) du sac tubulaire (32 ; 34) et qui comporte une bordure (16) dépassant de cette paroi frontale (14),
-- une ouverture (18 ; 20) ménagée dans la paroi frontale (14) et entourée par un manchon (22) qui dépasse de la paroi frontale (14),
-- un petit tube de percée (48 ; 50) qui est guidé en translation axiale dans le manchon (22) et susceptible d'être déplacé depuis une position de retrait, dans laquelle le petit tube de percée (48 ; 50) ne dépasse pas au-delà du plan d'appui (47), jusque dans une position d'avance dans laquelle le petit tube de percée (48 ; 50) dépasse au-delà du plan d'appui (47), et
-- un élément d'actionnement (62) agencé à l'extérieur autour du manchon (22) et capable de translation axiale, pour déplacer le petit tube de de percée (48 ; 50) hors de la position de retrait jusque dans la position d'avance,
-- l'élément d'actionnement (62) comporte une surface d'appui (70) pour l'appui contre le petit tube de percée (48 ; 50) et peut être verrouillé à l'encontre de déplacements axiaux inopinés dans deux positions de déplacement sur le manchon (22) et/ou sur le capuchon de réception (12), et
-- l'élément d'actionnement (62) présentant un tronçon taraudé (66) et le manchon (22) présentant un tronçon fileté (74),
**caractérisé en ce que** :
-- le tronçon fileté (74) est agencé de manière écartée aussi bien du capuchon de réception (12) que de l'extrémité de sortie (28) du manchon (22), sur au moins l'extension axiale du tronçon taraudé (66) de l'élément d'actionnement (62),
-- le tronçon taraudé (66) de l'élément d'actionnement (62) est agencé sur l'extrémité (64) de l'élément d'actionnement (62) tournée vers le capuchon de réception (12) en étant écarté depuis la surface d'appui (70) de l'élément d'actionnement (70) au moins sur l'extension axiale du tronçon fileté (74) du manchon (22), et
-- partant de la position de retrait du petit tube de percée (48 ; 50), lors de l'exercice d'une force axiale sur l'élément d'actionnement (62) en direction du capuchon de réception (12), le tronçon taraudé (66) de l'élément d'actionnement (62) et susceptible d'être amené en engagement vissé avec le tronçon fileté (74) du manchon (22).

2. Dispositif selon la revendication 1, **caractérisé en ce que** la paroi frontale (14) du capuchon de réception (12) est prévue pour recevoir l'appui des surfaces frontales (44 ; 46) de deux sacs tubulaires (32 ; 34), et **en ce que** dans le manchon de réception (22) sont agencés deux petits tubes de percée (48 ; 50) pour pénétrer dans les surfaces frontales (44 ; 46) des deux sacs tubulaires (32 ; 34) avec faculté de translation axiale, dans le but d'un mouvement conjoint par l'élément d'actionnement (62).

3. Dispositif selon la revendication 2, **caractérisé en ce qu'**un mélangeur (77) pour le mélange de masses pâteuses sortant des petits tubes de percée (48 ; 50) est susceptible d'être coiffé sur les petits tubes de percée (48 ; 50).
